# EUROPÄISCHE PATENTSCHRIFT

(11) **EP 2 925 199 B1**
(45) Veröffentlichungstag und Bekanntmachung des Hinweises auf die Patenterteilung: **03.05.2017**
(21) Anmeldenummer: 13802562.2
(22) Anmeldetag: 27.11.2013
(51) Int. Cl.: A47J 43/07

(54) **KÜCHENMASCHINE**
KITCHEN MACHINE
MACHINE POUR LA CUISINE

(30) Priorität: 29.11.2012 DE 102012111603
(43) Veröffentlichungstag der Anmeldung: 07.10.2015
(73) Patentinhaber: Vorwerk & Co. Interholding GmbH, 42275 Wuppertal (DE)
(72) Erfinder: KOETZ, Hendrik, 58300 Wetter (DE)
(74) Vertreter: Müller, Enno
(86) Internationale Anmeldenummer: PCT/EP2013/074798
(87) Internationale Veröffentlichungsnummer: WO 2014/083022

(56) Entgegenhaltungen:
- WO-A1-2014/083022
- DE-A1-102010 060 650

## Beschreibung

Die Erfindung betrifft eine elektrisch betriebene Küchenmaschine mit einem Rührgefäß und einem Rührwerk in dem Rührgefäß.

Küchenmaschinen der in Rede stehenden Art sind bekannt, so beispielsweise aus der DE 102007059236 A1. Mittels solcher Küchenmaschinen ist die Bearbeitung von Lebensmitteln, darüber hinaus bei aufheizbaren Rührgefäßen das Garen von Speisen möglich, wozu insbesondere die auf das Rührgefäß beziehungsweise auf den Inhalt des Rührgefäßes einwirkende Heizleistung bevorzugt durch den Benutzer regelbar ist, wie auch bevorzugt die Drehrichtung und die Drehgeschwindigkeit des Rührwerkes in dem Rührgefäß, darüber hinaus gegebenenfalls auch die Zeitdauer der Einwirkung von Heizung und/oder Rührwerk.Ein weiteres Stand der Technik Dokument ist die DE102010060650. Bekannt ist weiter, insbesondere die vorgenannten Parameter der Küchenmaschine durch elektrische beziehungsweise elektronische oder mechanische Stellmittel an der Küchenmaschine einzustellen, so beispielsweise mittels Drehschalter oder Taster. Auch ist in diesem Zusammenhang bekannt, der Küchenmaschine einen bevorzugt nicht flüchtigen Speicher zuzuordnen, der eine Rezeptauswahl anbietet. Eine solche Rezeptauswahl ist bevorzugt auf einem Display der Küchenmaschine anzeig- und auswählbar. Diesbezüglich wird auf die DE 102009055794 A1 oder auch die DE 102010060650 A1 verwiesen. Wählt der Benutzer ein in der Küchenmaschine hinterlegtes Rezept aus, so werden bevorzugt die einzustellenden Parameter, wie gegebenenfalls Temperatur, Rührwerk-Drehzahl und Zeitdauer von dem Programm vorgegeben und, gegebenenfalls nach Bestätigung durch den Benutzer, selbsttätig eingestellt; sind darüber hinaus gegebenenfalls durch den Benutzer abänderbar.

Ausgehend von dem dargelegten Stand der Technik beschäftigt sich die Erfindung mit der Aufgabenstellung, eine hinsichtlich Anwendung und Benutzung vorteilhafte Küchenmaschine anzugeben.

Eine mögliche Lösung der Aufgabe ist nach einem ersten Erfindungsgedanken bei einer Küchenmaschine gegeben, bei welcher darauf abgestellt ist, dass die Küchenmaschine eine Kamera, insbesondere elektronische Kamera aufweist, welche potenziell in Richtung auf den Benutzer der Küchenmaschine gerichtet ist, und dass eine Gestenerkennungssoftware sowie eine Gestendatenbank gespeichert sind und dass in Abhängigkeit einer Gestenerkennung eine Arbeitsroutine der Küchenmaschine durchführbar ist.

Insbesondere die Einstellung der Parameter wie Drehzahl, Temperatur und Zeitdauer sind bevorzugt allein durch Gesten des Benutzers einstellbar. Bevorzugt sind darüber hinaus auch komplexe Arbeitsroutinen, welche als solche in der Küchenmaschine hinterlegt sind, durch Gesten des Benutzers einstellbar.

Die Küchenmaschine muss zur Einstellung und Durchführung einer bestimmten Anweisung nicht mehr berührt werden. Ein Benutzer muss nicht, um eine Beeinträchtigung der Tastatur oder des Displays zu vermeiden, sich vor einer Bedienung der Küchenmaschine die Hände säubern.

Mittels einfacher Gesten, die der Benutzer entfernt von der Küchenmaschine, ohne körperlichen Kontakt hierzu, ausführt, können die den Gesten zugeordneten Befehle an die Küchenmaschine gegeben werden.

Bevorzugt ist vorgesehen, dass auch durch eine definierte Aneinanderreihung geeigneter Gesten eine vorbestimmte Abfolge von Funktionen der Küchenmaschine ausgeführt werden.

Die Gesten sind in bevorzugter Ausgestaltung mit einer Hand, alternativ mit beiden Händen durchzuführen. Darüber hinaus kann beispielsweise auch eine Kopfbewegung als von der Küchenmaschine auszuführende Geste definiert sein.

Mit der in der Küchenmaschine eingebauten Kamera wird bevorzugt kontinuierlich ein Bild aufgenommen. Befindet sich ein Benutzer, gegebenenfalls ein zuvor als berechtigte Person definierter Benutzer, in einem definierten Bildausschnitt und Entfernung - bevorzugt 0,4 bis 2 m, weiter bevorzugt etwa 1 m - zu der Kamera, wird das aufgenommene Bild untersucht und Körper beziehungsweise Körperteile, wie Gesicht oder Hände, extrahiert.

Die Erkennung erfolgt bevorzugt mit einer üblichen VGA-Kamera. Befindet sich der Körper der erkannten Person in einer stabilen Position, wird die Gestenerkennung initialisiert. Die Bewegung beispielsweise einer Hand (rechts oder links oder beide Hände) wird hierbei stetig beobachtet und analysiert. Zur Erkennung wird die Bewegung beispielsweise einer Hand mittels Berechnung von Bewegungsvektoren ermittelt. Hierzu eignet sich insbesondere die Differenzbildberechnung, in der in aufeinanderfolgenden Bildern zunächst ein extrahiertes Merkmal (die Hand) bestimmt wird und deren Position in den analysierten Bildern gesucht wird. Stimmt eine Bewegung mit einer vorher definierten und in der Gestendatenbank gespeicherten Geste überein, wird die hierfür hinterlegte Funktion der Küchenmaschine ausgeführt.

Einfache Gesten sind z.B. vor, zurück, hoch, runter, linksrum, rechtsrum, drücken oder auch ziehen. Der Vergleich mit einer definierten Gestendatenbank erfolgt bevorzugt mit einem in der Küchenmaschine integrierten Prozessor beziehungsweise Mikrokontroller. Durch die Definition von einfachen Vektoren können die definierten Gesten geeignet abgebildet werden. Nach einer erfolgreichen Erkennung wird abhängig von einem hinterlegten, der Geste zugeordneten Befehl oder Funktion eine Arbeitsroutine der Küchenmaschine durchgeführt. Beispielsweise wird eine Kochfunktion aufgerufen und durchgeführt.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

So ist in einer weiter bevorzugten Ausgestaltung vorgesehen, dass zwei Kameras, insbesondere elektronische Kameras, vorgesehen sind.

Um Fehlfunktionen zu vermeiden, ist in einer Weiterbildung vorgesehen, dass durch die Gestenerkennung (zumindest) die Freischaltung der Küchenmaschine erfolgt. Mit der Freischaltung kann beispielsweise eine übliche Bedienbarkeit der Küchenmaschine über Schalter, Tasten und/oder einen Touchscreen erst ermöglicht werden. Ohne die Freischaltung kann über die genannten Bedienelemente keine Funktion der Küchenmaschine aufgerufen und zur Ausführung gebracht werden. Es ist möglich, dass eine bestimmte Geste, eine Signalgeste, vorgesehen ist, nach deren Erkennung durch die Küchenmaschine erst die vollständige Kontrolle über die Küchenmaschine im Sinne der üblichen Bedienbarkeit ermöglicht ist.

Hierbei kann auch vorgesehen sein, dass nach Erkennen der Signalgeste auch die weitere Bedienung der Küchenmaschine über Gesten ermöglicht ist.

Alternativ oder ergänzend kann vorgesehen sein, dass durch eine Gestenerkennung, insbesondere eine Erkennung der Signalgeste, eine Freischaltung einer Sprachsteuerung erfolgt. Nach der Freischaltung der Sprachsteuerung kann die Küchenmaschine allein oder auch kombinativ zu den Gesten mit Sprachbefehlen steuerbar sein.

Bevorzugt ist auch vorgesehen, dass bei jeder der genannten Steuerungsmöglichkeiten ergänzend eine Bedienung und Steuerung der Küchenmaschine in üblicher Weise durch Tasten- und/oder Display-Betätigung erfolgen kann.

Durch die Gestenerkennung ist auch weiter bevorzugt eine Rezeptauswahl möglich. Zugeordnet einer bestimmten Geste kann eine Auswahl von Rezepten angeboten werden oder ein bestimmtes Rezept aus der Rezeptdatenbank. Zudem ist dem Benutzer in bevorzugter Weiterbildung die Möglichkeit gegeben, allein durch Gesten sich durch das Menü der Rezeptauswahl zu navigieren, so beispielsweise durch Handbewegungen, die angelehnt sind an die Bewegung zum Bedienen eines Touchscreens.

In einer weiter bevorzugten Ausgestaltung ist vorgesehen, dass eine Gesichtserkennungssoftware sowie eine Gesichtsdatenbank gespeichert sind und dass in Abhängigkeit durch eine Gesichtserkennung die Gestenerkennung aktivierbar ist.

Bevorzugt ist, dass erst nach Erkennen eines in der Gesichterdatenbank vorhandenen Gesichtsbildes die Küchenmaschine mit ihren Funktionen genutzt werden kann. Es kann auch vorgesehen sein, dass im Hinblick auf eine Vielzahl von in der Gesichtsdatenbank hinterlegten Gesichtern eines oder mehrere von einem Benutzer markiert werden können, bezüglich welcher nur die Nutzung der Küchenmaschine ermöglicht werden soll.

Bevorzugt ist auch, dass erst mit Erkennen eines Gesichts, das zudem einer berechtigten Person zugeordnet ist, die manuelle Bedienung der Küchenmaschine, d.h. die Bedienung der einzelnen Stellelemente, wie Drehzahl-, Temperaturund Zeitdauer-Steller möglich ist. Auch können zugehörig zu den Gesichtern beziehungsweise Gesichtsbildern in der Gesichterdatenbank einzelne Funktionen der Küchenmaschine eingeschränkt oder deaktiviert sein, andere Funktion hingegen beispielsweise aktiviert sein, um so eine eingeschränkte Nutzung der Küchenmaschine zu erlauben.

In bevorzugter Ausbildung weist die Küchenmaschine, gegebenenfalls zusätzlich zu der genannten Kamera, eine Elektroden-Anordnung auf, zur Ausbildung eines elektromagnetischen Feldes.

Eine mögliche Anordnung der Elektroden ist entsprechend einem Viereck. In einem Bereich des Bedienfeldes der Küchenmaschine kann das Viereck von vier Leiterbahnen oder Elektroden gebildet sein.

Eine stromdurchflossene Elektrode erzeugt ein elektromagnetisches Feld mit definierter Ausprägung. Abhängig von der Stromstärke lässt sich die Reichweite des elektromagnetischen Felds steuern. Für eine Küchenmaschine ist eine Reichweite von 10 bis 30 cm, insbesondere 20 cm angemessen. Dringt eine Hand oder ein menschliches Körperteil in das elektromagnetische Feld ein, wird das Feld durch die Leitfähigkeit des menschlichen Körpers beeinflusst, die Feldlinien richten sich an dem Körperteil aus und werden geerdet. Diese Beeinflussung kann an den Elektroden detektiert werden, woraus sich die Position des Körperteils berechnen lässt. Anhand der zeitlichen Veränderung der Position des Körperteils können definierte Gesten erkannt werden und in Maschinenbefehle umgesetzt werden.

Auch ist bevorzugt, dass die Gestenerkennung mit Anschalten der Küchenmaschine aktiviert ist. Mit Aktivieren der Küchenmaschine, beispielsweise zufolge Betätigung eines Hauptschalters oder Einstecken eines Netzsteckers in die Netzsteckdose der hausseitigen Stromversorgung, befindet sich die Küchenmaschine bevorzugt in einem sogenannten Stand-By-Modus, in welchem die Gestenerkennung zugleich aktiviert ist.

Ein Aufheizen und/oder ein Laufen des Rührwerkes wird in weiter bevorzugter Ausgestaltung nur durchgeführt, wenn Drehzahl, Temperatur und Zeitdauer vorgegeben werden oder auf einen diesbezüglichen Vorschlag der Küchenmaschine hin akzeptiert werden. Dies bedeutet, dass der Benutzer in einem Fall für alle drei Parameter Werte angeben muss, so insbesondere für die Drehzahl, die Temperatur und die Zeitdauer. Die Reihenfolge kann hierbei vorgegeben sein beziehungsweise durch eine Sprachausgabe der Küchenmaschine nacheinander abgefragt werden.

Alternativ, insbesondere bei Nutzung eines hinterlegten Rezepts, welches bevorzugt durch einen Gestenbefehl aufgerufen wurde, kann über die Küchenmaschine eine akustische Ausgabe der entsprechend dem Rezept selbsttätig eingestellten Parameter, wie Drehzahl, Temperatur und Zeitdauer durch den Benutzer beispielsweise per Gesten- oder Spracheingabe bestätigt werden.

Die hier vor- und nachstehend beschriebene Softwareauswertung braucht nicht notwendig in der Küchenmaschine vorgenommen zu werden. Sie kann auch durch beispielsweise Funkverbindung zu einem außerhalb der Küchenmaschine befindlichen Computer oder Handgerät, wie etwa einem Mobiltelefon, durchgeführt werden. Sie kann auch in einem räumlich entfernten Computer ("Cloud") durchgeführt werden.

Nachstehend ist die Erfindung anhand der beigefügten Zeichnung erläutert, die aber lediglich ein Ausführungsbeispiel darstellt. Auf der Zeichnung zeigt:
- Fig. 1: in Ansicht eine Küchenmaschine der in Rede stehenden Art mit einem in einer Rührgefäßaufnahme aufgenommenen Rührgefäß, mechanischen Schaltern zur Einstellung von Stellgrößen sowie einem Display;

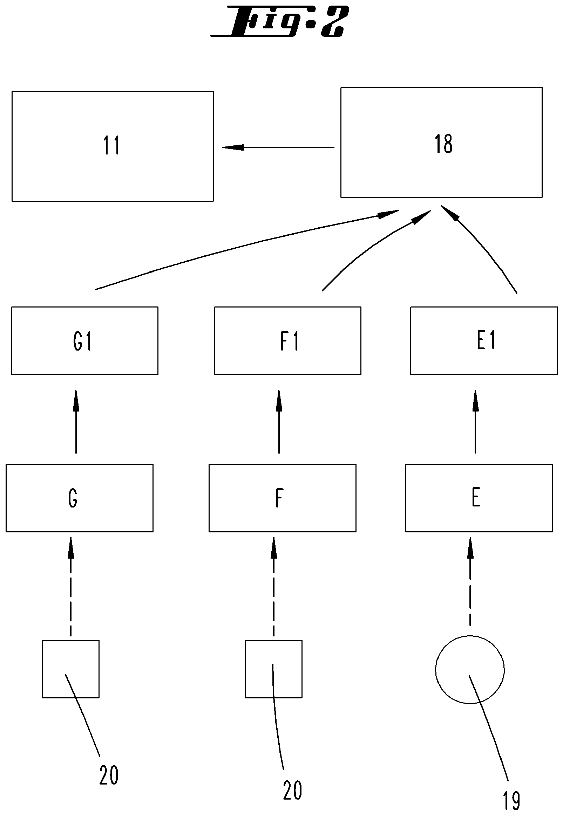

- Fig. 2: eine schematische Darstellung der zur Steuerung der Küchenmaschine in dieser abgelegten Erkennungssoftware und Datenbanken;
- Fig. 3: ein Flussdiagramm zur Darstellung einer beispielhaften Bedienung der Küchenmaschine.

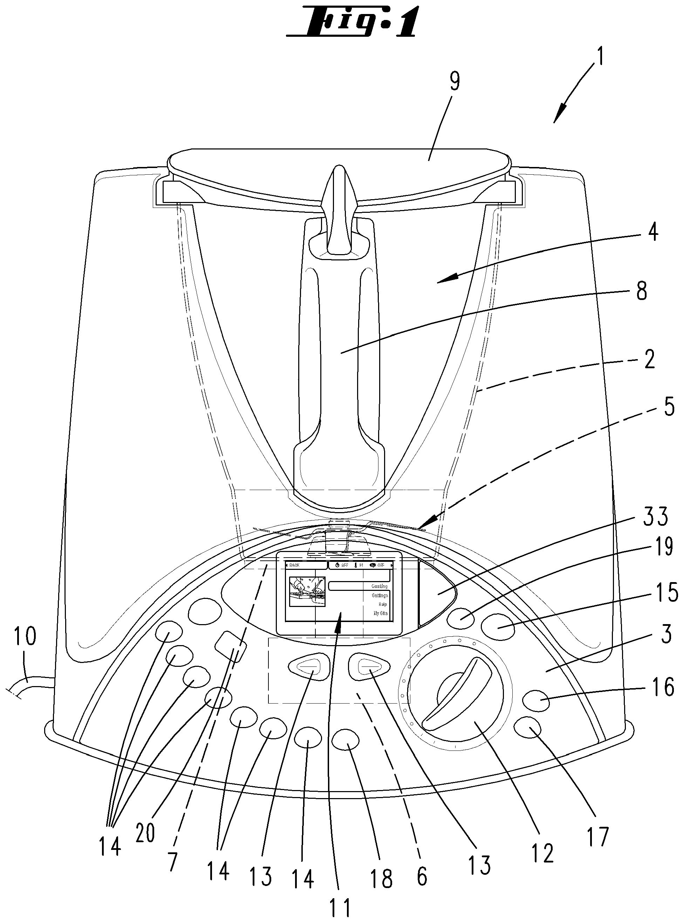

Dargestellt und beschrieben ist zunächst mit Bezug zu Figur 1 eine Küchenmaschine 1 mit einer Rührgefäß-Aufnahme 2 und einem Bedienfeld 3.

Der Küchenmaschine 1 ist ein Rührgefäß 4 zuordbar, indem dieses in die Rührgefäß-Aufnahme 2 insbesondere im Fußbereich des Rührgefäßes 4 bevorzugt formschlüssig eingesetzt wird. In dem Rührgefäß 4 ist dem Rührgefäßboden zugeordnet ein Rührwerk 5 vorgesehen, welches über einen in der Küchenmaschine 1 unterhalb der Rührgefäß-Aufnahme 2 angeordneten, in der Zeichnung lediglich schematisch dargestellten Elektromotor 6 betrieben wird. Das Rührwerk 5 verbleibt in dem Rührgefäß 4 auch bei Entnahme desselben aus der Rührgefäß-Aufnahme 2, wozu weiter bevorzugt das Rührwerk 5 in der Zuordnungsstellung über eine drehfeste Steckkupplung mit dem Elektromotor 6 verbunden ist.

Der Boden des Rührgefäßes 4 ist bevorzugt beheizbar zur Erhitzung eines in dem Rührgefäß 4 befindlichen Garguts. Bevorzugt kommt hier eine elektrische Widerstandsheizung 7 zum Einsatz, welche in dem Boden des Rührgefäßes 4 integriert ist.

Das Rührgefäß 4 ist bevorzugt topfartig mit im Wesentlichen kreisrundem Querschnitt ausgebildet, bei sich zur Topföffnung, d.h. nach oben hin konisch erweiterndem Querschnitt. Die Topfwandung besteht bevorzugt aus einem Metallwerkstoff.

Weiter weist das Rührgefäß 4 einen bevorzugt senkrecht ausgerichteten Haltegriff 8 auf, welcher beispielsweise sockelseitig sowie topfrandseitig an dem Rührgefäß 4 festgelegt ist.

Das Rührgefäß 4 wird der Küchenmaschine 1 bevorzugt derart zugeordnet, dass der Haltegriff 8 sich freistehend zwischen Gerätegehäuse-Backen, dem Bedienfeld 3 zugewandt, erstreckt, wobei der Sockelbereich des Rührgefäßes 4 sich auf einem integralen Boden der Küchenmaschine 1 im Bereich der Aufnahme 2 abstützt, dies unter Kupplung von Rührwerksantrieb und Rührwerk 5 sowie bevorzugt elektrischer Kontaktierung der rührgefäßbodenseitigen Heizung.

Auf das Rührgefäß 4 ist ein Gefäßdeckel 9 aufsetzbar, welcher im Betrieb der Küchenmaschine 1, weiter insbesondere bei Betrieb des Rührwerks 5 und/oder der bodenseitigen Widerstandsheizung 7, in einer aufgesetzten Stellung verriegelt ist, weiter bevorzugt an dem Gehäuse der Küchenmaschine 1. Zentral besitzt der Gefäßdeckel 9 eine nicht dargestellte Einfüllöffnung.

Die Elektroversorgung des Elektromotors 6 sowie der weiter bevorzugt rührgefäßbodenseitig vorgesehenen Heizung 7 und darüber hinaus auch der elektrischen Steuerung der gesamten Küchenmaschine 1 ist über ein Netzanschlusskabel 10 erreicht.

In dem Bedienfeld 3 ist zunächst bevorzugt ein Display 11 vorgesehen. Weiter bevorzugt trägt das Bedienfeld 3 einen oder mehrere mechanische Schalter und Regler zum Einstellen unterschiedlicher Stellgrößen für den Betrieb der Küchenmaschine 1. So ist bevorzugt zunächst ein Drehschalter 12 vorgesehen, zur Einstellung der Drehzahl des Rührwerks 5, wobei bevorzugt über den Drehschalter 12 Rührwerk-Drehzahlstufen angewählt werden und jeder Rührwerk-Drehzahlstufe eine vorgegebene Rührwerk-Drehzahl zugeordnet ist.

In dem dargestellten Ausführungsbeispiel sind weitere, bevorzugt unterhalb des Displays 11, zwei mechanische Schalter in Form von Tasten 13 vorgesehen. Hiermit kann eine Zeitdauer als Stellgröße eingegeben werden, über welche Zeitdauer bevorzugt das Rührwerk 5 und/oder die bodenseitige Heizung 7 des Rührgefäßes 4 aktiviert wird.

Darüber hinaus kann eine Reihe von mechanischen Schaltern in Form von Tasten 14 vorgesehen sein, über welche unterschiedliche, vorgegebene Temperaturen wählbar sind. Bevorzugt handelt es sich um Temperaturen im Bereich von 37°C bis hin zu 100°C. Mit der hierüber gewählten Temperatur und der gegebenenfalls über den Drehschalter 12 gewählten Rührwerk-Drehzahl wird das sich in dem Rührgefäß 4 befindliche Gargut über den mittels der Tasten 13 vorgegebenen Zeitraum mit Wärme beaufschlagt.

Zudem können in dem Bedienfeld 3 bevorzugt weitere Tasten zum Aufrufen hinterlegter Sonderfunktionen vorgesehen sein, so insbesondere eine Taste 15 zur Aktivierung einer Turbofunktion, bei welcher kurzzeitig, d.h. bevorzugt über einen Zeitraum von 1 bis 3 Sekunden, weiter bevorzugt über einen dem Zeitraum der Tastenbeaufschlagung entsprechenden Zeitraum, das Rührwerk 5 mit einer Höchstdrehzahl betrieben wird. So führt weiter bevorzugt die Turbofunktion zu einer kurzzeitigen Drehzahl des Rührwerks 5 von mehr als 10.000 U/min, weiter bevorzugt mehr als 12.000 U/min, bis hin zu beispielsweise 15.000 U/min.

Eine weitere Taste 16 dient bevorzugt zur Aktivierung einer Richtungsumkehrfunktion für das Rührwerk 5. Dreht das Rührwerk 5 im üblichen Betrieb bevorzugt im Rechtslauf, so ermöglicht die Taste 16 die Umschaltung auf einen Linkslauf. Die neue Drehrichtung kann bis zum Ablauf des über die Tasten 13 vorgegebenen Zeitraumes beibehalten werden. Weiter bevorzugt schaltet die Elektronik der Küchenmaschine 1 (dann) selbsttätig in die Standard-Drehrichtung zurück. Durch eine nochmalige Betätigung der Taste 16 während des Rührwerkbetriebs kann auch eine erneute Drehrichtungsumkehr durchführbar sein.

Zum Weiteren ist bevorzugt eine Taste 17 vorgesehen, zur Aktivierung einer Teigrührfunktion, welche insbesondere bei der Herstellung schwerer Hefe- und Brotteige zur Anwendung kommt.

Die über den Drehschalter 12 sowie über die Tasten 13 bis 17 einzustellenden Stellgrößen beziehungsweise aufzurufenden Funktionen sind bevorzugt in dem Display 11 anzeigbar.

In der Küchenmaschine 1 ist weiter bevorzugt eine Rezeptdatenbank 18 hinterlegt. Diese beinhaltet, bevorzugt kategorisiert, eine Mehrzahl von Rezepten zur Zubereitung in der Küchenmaschine 1. Jedem Rezept zugeordnet sind bevorzugt die Parameter beziehungsweise Stellgrößen bezüglich Drehzahl des Rührwerks 5, Temperatur der Widerstandsheizung 7 und Zeitdauer. Bevorzugt werden diese Stellgrößen mit Aktivierung des Rezeptablaufes selbsttätig durch die Küchenmaschine 1 eingestellt oder dem Benutzer zur Bestätigung vorgegeben.

Darüber hinaus können jedem Rezept beispielsweise Benutzer oder Benutzergruppen zugeordnet sein, so dass jeder Benutzer der Küchenmaschine 1 seine bevorzugten Rezepte quasi mit einem Knopfdruck aufrufen kann, ohne sich zeitaufwendig durch das Menü zu bewegen. Letzteres wird in üblicher Weise bevorzugt auf dem Display 11 angezeigt, welches Display 11 in einer Ausführungsform als Touchscreen ausgebildet sein kann.

Die Küchenmaschine 1 ist, bevorzugt auch ergänzend und parallel zu einer Bedienung über ein Akustiksignal, in üblicher Weise manuell bedienbar, so insbesondere zufolge Betätigung von Drehschalter 12 und Tasten 13 bis 17. Bevorzugt wird die Küchenmaschine 1 zur Bedienung zunächst freigeschaltet, weiter bevorzugt allein durch eine oder mehrere berechtigte Personen.

Der Berechtigungsnachweis zur Freischaltung der Küchenmaschine und zur Aktivierung der Betriebsfunktionen der Küchenmaschine ist bevorzugt durch eine Sprachsteuerung und/oder eine Gestensteuerung und/oder eine Gesichtserkennung erreicht.

Hierzu weist die Küchenmaschine 1 weiter bevorzugt eine Spracherkennungssoftware E und/oder eine Gesichtserkennungssoftware F und/oder eine Gestenerkennungssoftware G auf. Weiter ist insbesondere im Bereich des Bedienfeldes 3 in Zusammenwirkung mit der Spracherkennungssoftware E ein Schallwandler 19 in Form eines Mikrofons angeordnet. Das Mikrofon, wie auch eine weiter bevorzugt vorgesehene elektronische Kamera 20, ist in dem Bedienfeld 3 potenziell in Richtung auf den Benutzer der Küchenmaschine 1 gerichtet. Die Kamera 20 dient zur Aufnahme von auswertbaren Bildern im Zusammenhang mit der Gesichtserkennungssoftware F und/oder der Gestenerkennungssoftware G.

Bei der Spracherkennung wird bevorzugt das gesprochene Wort, insbesondere das Befehlswort beziehungsweise der daraus resultierende Schalldruck in elektrische Signale umgewandelt und von einem digitalen Signalprozessor verarbeitet und analysiert. Nach der kontinuierlichen Analyse der empfangenen Worte und dem Vergleich mit einer vorher definierten Wortliste innerhalb einer Befehlsdatenbank E₁ liefert der Signalprozessor das Wort mit der höchsten Wahrscheinlichkeit zurück, welches mit dem gesprochenen Wort übereinstimmt. Ein Mikrokontroller analysiert in einem weiteren Schritt das in Textform vorliegende Wort und übersetzt dieses in einen Maschinenbefehl oder in ein Rezept beziehungsweise setzt dies derart um, dass gezielt ein Rezept aus der Rezeptdatenbank 18 abgerufen und zumindest auf dem Display 11 angezeigt wird. In einer bevorzugten Weiterbildung führt die Übermittlung des Maschinenbefehls an die Rezeptdatenbank 18 dazu, dass die zu dem aufgerufenen Rezept oder Rezeptabschnitt zugehörigen Parameter, wie Drehzahl, Temperatur und Zeit automatisch voreingestellt werden.

Alternativ oder auch kombinativ zu der Spracherkennung wird unter Nutzung der in dem Bedienfeld 3 vorgesehenen Kamera 20 kontinuierlich ein Bild aufgenommen, dies insbesondere zur Gesichtserkennung, darüber hinaus alternativ oder kombinativ hierzu zur Gestenerkennung. Befindet sich ein Benutzer in einem definierten Bildausschnitt und einer definierten Entfernung vor der Küchenmaschine 1, wird das Bild untersucht, im Falle einer Gesichtserkennung das Gesicht extrahiert und mit einer vorher erstellten Gesichterdatenbank F₁ verglichen. Der Vergleich mit der Gesichterdatenbank F₁ ist erreicht mit einem in der Küchenmaschine integrierten Prozessor, wobei die Gesichterdatenbank F₁, wie auch die weiteren Datenbanken bevorzugt in einem nicht flüchtigen Speicher hinterlegt sind.

Ist über die Gesichtserkennung F ein in der Gesichterdatenbank F₁ als Referenzwert hinterlegtes Gesicht erkannt, so kann auch diese Erkennung, wie auch bei der Spracherkennung, zur Übersetzung in einen Maschinenbefehl oder in ein Rezept zur Auswahl aus der Rezeptdatenbank 18 führen.

Wird über die Kamera 20 eine Geste des Benutzers erkannt, beispielsweise Aufund Abführen einer Hand, Wischen mit der Hand usw., kann dies bevorzugt zu denselben Arbeitsbefehlen wie vorbeschrieben bezüglich der Gesichtserkennung oder Spracherkennung führen.

Befindet sich ein Benutzer in einem definierten Bildausschnitt und Entfernung, wird das aufgenommene Bild untersucht und der Körper des Benutzers beziehungsweise Körperteile, wie Gesicht oder Hände, extrahiert. Befindet sich der Körper der erkannten Person in einer stabilen Position, wird die Gestenerkennung G initialisiert. Die Bewegung beispielsweise einer Hand wird hierbei stetig beobachtet und analysiert. Zur Erkennung wird die Bewegung einer Hand mittels Berechnung von Bewegungsvektoren ermittelt. Dafür eignet sich die Differenz-Bildberechnung, in der in aufeinanderfolgenden Bildern zunächst ein extrahiertes Merkmal (beispielsweise die Hand) bestimmt wird und deren Position in den analysierten Bildern gesucht wird. Stimmt eine Bewegung mit einer vorher definierten Geste der Gestendatenbank G₁ überein, wird die hierfür hinterlegte Funktion der Küchenmaschine 1 ausgeführt, so beispielsweise die Einstellung eines oder mehrerer Parameter, wie Drehzahl, Temperatur oder Zeit, darüber hinaus die Auswahl eines bestimmten Rezeptes aus der Rezeptdatenbank 18.

Die jeweilige Erkennung zur bevorzugt berührungslosen Steuerung der Küchenmaschine 1 - welche bevorzugt neben der üblichen manuellen Steuerung der Küchenmaschine 1 möglich ist - erfordert in einer bevorzugten Ausgestaltung zunächst das Anschalten der Küchenmaschine 1, insbesondere die Aktivierung derselben, beispielsweise über einen Hauptschalter. Alternativ ist die Freischaltung der Küchenmaschine durch einen bestimmten Sprachbefehl und/oder Gestenbefehl und/oder gegebenenfalls durch Erkennen eines bestimmten Gesichts erreichbar. So ist die Küchenmaschine 1 bevorzugt nur insgesamt aktivierbar durch Erfassen eines vorgegebenen Signalwortes oder einer vorgegebenen Geste, wobei sich bevorzugt Signalwort oder Geste von üblichen Worten oder Gesten stark unterscheidet.

Durch eine Gesichtserkennung ist die Freischaltung der Küchenmaschine 1 auf bestimmte Personen einschränkbar.

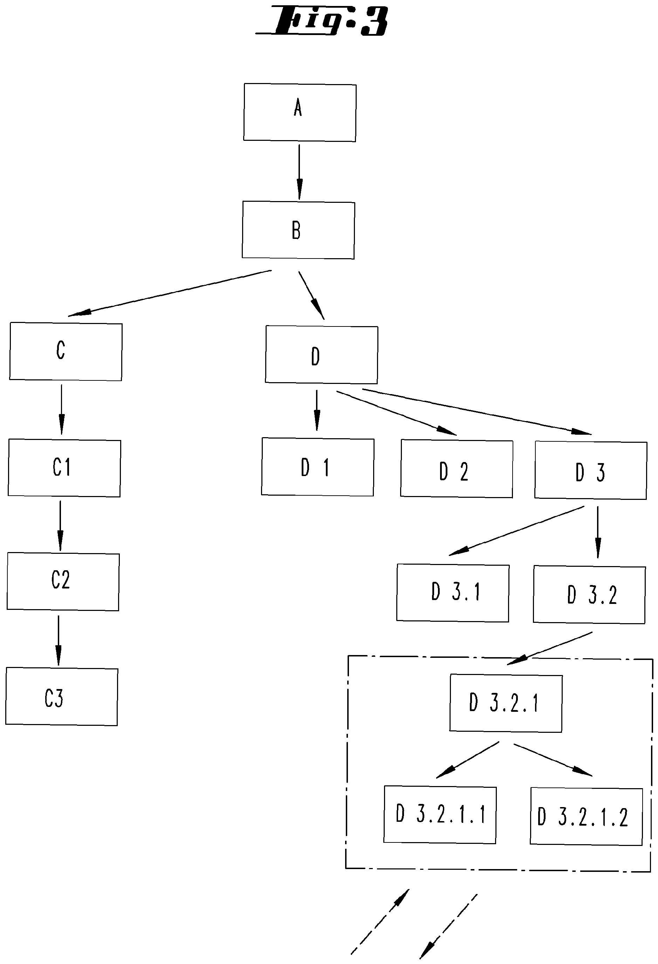

Ausgehend von dieser Freischaltung in Punkt A in Figur 3 ist die Küchenmaschine 1 unter Punkt B wahlweise bedienbar, so zum Einen in üblicher Weise manuell bedienbar, zum Weiteren berührungslos zufolge Gesten- und/oder Gesichts- und/oder Spracherkennung.

Durch ein bestimmtes Befehlswort und/oder eine bestimmte Geste und/oder durch ein mit entsprechendem Parameter belegtes Gesichtbild in der Gesichtsdatenbank können nach Freischaltung der jeweiligen Erkennung die Parameter manuell eingestellt werden (Punkt C), so insbesondere die Drehzahl C₁, die Temperatur C₂ und die Zeitdauer C₃, und/oder die Rezeptdatenbank unter Punkt D aufgerufen werden. Je nach Befehlswort, Gesicht oder Geste sind alle Funktionen freigeschaltet oder stehen nur eingeschränkt zur Verfügung.

Wie weiter aus dem Flussdiagramm in Figur 3 zu erkennen, sind die Rezepte D in stark gefächerten Untermenüs aufgeteilt, so in dem dargestellten Ausführungsbeispiel zunächst unter den Oberbegriffen "Soßen" D1, "Fleisch" D2 und "Backwaren" D3, wobei letzterer Begriff wiederum unterteilt ist in "Kuchen" D3.1 und "Brot" D3.2.

Der Menüpunkt "Brot" bietet unter anderem ein Untermenü "Brötchen" D3.2.1, welches wiederum unterteilt ist beispielsweise in "Weizen-Brötchen" D3.2.1.1 und "Roggen-Brötchen" D3.2.1.2.

Über die Spracherkennung E kann beispielsweise durch die Rezeptdatenbank manövriert werden, so insbesondere zufolge Befehlswort, die den einzelnen Menüpunkten entsprechen (beispielsweise "Rezepte", "Backwaren", "Brot" usw.).

Alternativ kann über die Spracherkennung E auch direkt ein Untermenü aufgerufen werden, beispielsweise durch das Wort "Brötchen", woraufhin dann im Display 11 unmittelbar das Untermenü angezeigt wird.

Weiter alternativ werden die möglichen Untermenüpunkte akustisch, zufolge einer Sprachausgabe angegeben, woraufhin der Benutzer mit entsprechendem Befehlswort reagieren kann. Entspricht das Befehlswort unmittelbar einem nicht sich weiter unterteilenden Untermenü, in dem dargestellten Ausführungsbeispiel beispielsweise "Roggen-Brötchen", so wird das entsprechende Rezept unmittelbar aufgerufen und gegebenenfalls die Parameter für Drehzahl, Temperatur und Zeit eingestellt.

Die Gestenerkennung und die hieraus resultierende Arbeitsroutine der Küchenmaschine 1 ist äquivalent zu der vorbeschriebenen Spracherkennung. Unterschiedliche Gesten, insbesondere mit der Hand, führen zu jeweils der Geste zugehörigen Arbeitsroutinen der Küchenmaschine 1, so beispielsweise zum Aufruf eines bestimmten Rezeptes oder zur Einstellung etwaiger Sonderfunktionen der Küchenmaschine, wie beispielsweise die Rührteigstellung.

Bei Erkennung eines bestimmten Gesichts kann in Abhängigkeit von den zu dem in der Datenbank hinterlegten Vergleichsgesicht zugehörigen Parametern eine Auswahl an Rezepten bis hin zu einem Rezept vorgegeben werden. Unabhängig davon, ob eine Gestenerkennung, eine Gesichtserkennung, oder eine Spracherkennung nutzbar ist oder genutzt wird oder auch eine Kombination hieraus, ist weiter bevorzugt, dass der registrierte und umzusetzende Befehl zunächst beispielsweise optisch in dem Display 11 oder akustisch durch Sprachausgabe nachgefragt wird. Bei einer Spracherkennung kann der Benutzer hierauf beispielsweise mit ja oder nein reagieren.

Die Einstellung von Drehzahl C₁ und/ oder Temperatur C₂ mittels einer Geste und/ oder einem Wortbefehl wird in bevorzugter Ausgestaltung nur dann in eine entsprechende Aktion umgesetzt, wenn zudem auch die Zeitdauer C₃ eingestellt wurde. Dies kann manuell erfolgen. Darüber hinaus kann auch eine Nachfrage erfolgen, um den Nutzer aufzufordern, die Zeitdauer noch anzugeben.

Drehzahl, Temperatur und/ oder Zeit können bei einer Gestenerkennung beispielsweise durch stetige Aufwärtsbewegung der Hand oder Abwärtsbewegung derselben eingestellt werden.

**Bezugszeichenliste:**

| | | | |
|---|---|---|---|
| 1 | Küchenmaschine | A | Freigabe |
| 2 | Rührgefäß-Aufnahme | B | Auswahl |
| 3 | Bedienfeld | C | Parametereinstellung |
| 4 | Rührgefäß | C₁ | Drehzahl |
| 5 | Rührwerk | C₂ | Temperatur |
| 6 | Elektromotor | C₃ | Zeitdauer |
| 7 | Widerstandsheizung | D | Rezepte |
| 8 | Haltegriff | D1 | Soßen |
| 9 | Gefäßdeckel | D2 | Fleisch |
| 10 | Netzanschlusskabel | D3 | Backwaren |
| 11 | Display | D3.1 | Kuchen |
| 12 | Drehschalter | D3.2 | Brot |
| 13 | Taste | D3.2.1 | Brötchen |
| 14 | Taste | D3.2.1.1 | Weizen-Brötchen |
| 15 | Taste | D3.2.1.2 | Roggen-Brötchen |
| 16 | Taste | E | Spracherkennung |
| 17 | Taste | E₁ | Befehlsdatenbank |
| 18 | Rezeptdatenbank | F | Gesichtserkennung |
| 19 | Schallwandler | F₁ | Gesichtsdatenbank |
| 20 | Kamera | G | Gestenerkennung |
| | | G₁ | Gestendatenbank |

## Patentansprüche

1. Elektrisch betriebene Küchenmaschine (1) mit einem Rührgefäß (4) und einem Rührwerk (5) in dem Rührgefäß (4), wobei die Küchenmaschine (1) eine Kamera (20), insbesondere elektronische Kamera aufweist, welche potenziell in Richtung auf den Benutzer der Küchenmaschine (1) gerichtet ist, **dadurch gekennzeichnet, dass** eine Gestenerkennungssoftware sowie eine Gestendatenbank (G₁) gespeichert sind und dass in Abhängigkeit einer Gestenerkennung (G) eine Arbeitsroutine der Küchenmaschine (1) durchführbar ist.

2. Küchenmaschine nach Anspruch 1, **dadurch gekennzeichnet, dass** durch die Gestenerkennung (G) die Freischaltung der Küchenmaschine (1) erfolgt.

3. Küchenmaschine nach einem der vorhergehenden Ansprüche, **dadurch gekennzeichnet, dass** durch die Gestenerkennung (G) die Freischaltung einer Sprachsteuerung (E) der Küchenmaschine (1) erfolgt.

4. Küchenmaschine nach einem der vorhergehenden Ansprüche, **dadurch gekennzeichnet, dass** durch die Gestenerkennung (G) eine Rezeptauswahl der Küchenmaschine (1) erfolgt.

5. Küchenmaschine nach einem der vorhergehenden Ansprüche, **dadurch gekennzeichnet, dass** eine Gesichtserkennungssoftware sowie eine Gesichtsdatenbank (F₁) gespeichert sind und dass in Abhängigkeit durch eine Gesichtserkennung (F) die Gestenerkennung (G) aktivierbar ist.

6. Küchenmaschine nach einem der vorhergehenden Ansprüche, **dadurch gekennzeichnet, dass** die Gestenerkennung (G) mit Anschalten der Küchenmaschine (1) aktiviert ist.

7. Küchenmaschine nach einem der vorhergehenden Ansprüche, **dadurch gekennzeichnet, dass** die Gestenerkennung (G) nur durch Ausschalten der Küchenmaschine (1) deaktivierbar ist.

8. Küchenmaschine nach einem der vorhergehenden Ansprüche, **dadurch gekennzeichnet, dass** ein Aufheizen und/oder ein Laufen des Rührwerks (5) nur durchgeführt wird, wenn Drehzahl (C₁), Temperatur (C₂) und Zeitdauer (C₃) vorgegeben werden oder auf einen diesbezüglichen Vorschlag der Küchenmaschine (1) hin akzeptiert werden.

## Claims

1. An electrically operated food processor (1) with a mixing bowl (4) and a mixer (5) in the mixing bowl (4), wherein the food processor (1) encompasses a camera (20), in particular an electronic camera, which is potentially directed towards the user of the food processor (1), **characterized in that** a gesture recognition software as well as a gesture data bank (G₁) are stored and that gesture recognition (G) can be used to cause the food processor (1) to carry out a routine task.

2. The food processor according to claim 1, **characterized in that** the gesture recognition (G) activates the food processor (1).

3. The food processor according to one of the preceding claims, **characterized in that** the gesture recognition (G) activates a speech control (E) of the food processor (1).

4. The food processor according to one of the preceding claims, **characterized in that** the gesture recognition (G) activates a recipe selection of the food processor (1).

5. The food processor according to one of the preceding claims, **characterized in that** a face recognition software as well as a face data base (F₁) are stored and that the gesture recognition (G) can be activated as a function of a face recognition (F).

6. The food processor according to one of the preceding claims, **characterized in that** the gesture recognition (G) is activated by turning on the food processor (1).

7. The food processor according to one of the preceding claims, **characterized in that** the gesture recognition (G) can only be deactivated by turning off the food processor (1).

8. The food processor according to one of the preceding claims, **characterized in that** a heating and/or a running of the mixer (5) is carried out only when speed (C₁), temperature (C₂) and duration (C₃) are provided or are accepted in response to a corresponding suggestion from the food processor (1).

## Revendications

1. Robot de cuisine électrique (1), comprenant une cuve de brassage (4) et un agitateur (5) dans la cuve de brassage (4), dans lequel le robot de cuisine (1) comporte une caméra (20), en particulier une caméra électronique, laquelle est dirigée potentiellement sur l'utilisateur du robot de cuisine (1), **caractérisé en ce que** sont stockés un logiciel de reconnaissance gestuelle, ainsi qu'une banque de données de gestes (G₁) et qu'une routine de travail du robot de cuisine (1) est susceptible d'être exécutée en fonction d'une reconnaissance gestuelle (G).

2. Robot de cuisine selon la revendication 1, **caractérisé en ce que** l'activation du robot de cuisine (1) résulte de la reconnaissance gestuelle (G).

3. Robot de cuisine selon l'une des revendications précédentes, **caractérisé en ce que** l'activation d'une commande vocale (E) du robot de cuisine (1) résulte de la reconnaissance gestuelle (G).

4. Robot de cuisine selon l'une des revendications précédentes, **caractérisé en ce qu'**un choix de recette du robot de cuisine (1) résulte de la reconnaissance gestuelle (G).

5. Robot de cuisine selon l'une des revendications précédentes, **caractérisé en ce que** sont stockés un logiciel de reconnaissance faciale, ainsi qu'une banque de données de visages (F₁) et que la reconnaissance gestuelle (G) est activable en fonction d'une reconnaissance faciale (F).

6. Robot de cuisine selon l'une des revendications précédentes, **caractérisé en ce que** la reconnaissance gestuelle (G) est activée avec la mise en marche du robot de cuisine (1).

7. Robot de cuisine selon l'une des revendications précédentes, **caractérisé en ce que** la reconnaissance gestuelle (G) ne peut être désactivée que par l'arrêt du robot de cuisine (1).

8. Robot de cuisine selon l'une des revendications précédentes, **caractérisé en ce qu'**un chauffage et/ou un fonctionnement de l'agitateur (5) ne sont exécutés que si une vitesse de rotation (C₁), une température (C₂) et une durée (C₃) sont prédéfinis ou si elles sont acceptés sur proposition du robot de cuisine (1).
